Europäisches Patentamt

European Patent Office

Office européen des brevets

(11) Veröffentlichungsnummer: **0 123 186**
**A1**

(12) # EUROPÄISCHE PATENTANMELDUNG

(21) Anmeldenummer: **84103867.2**

(22) Anmeldetag: **07.04.84**

(51) Int. Cl.³: **F 16 L 59/02**
**B 32 B 15/18**

(30) Priorität: **22.04.83 DE 3314694**

(43) Veröffentlichungstag der Anmeldung:
**31.10.84 Patentblatt 84/44**

(84) Benannte Vertragsstaaten:
**BE DE FR GB NL**

(71) Anmelder: **Fried. Krupp Gesellschaft mit beschränkter Haftung**
**Altendorfer Strasse 103**
**D-4300 Essen 1(DE)**

(72) Erfinder: **Jorde, Joachim**
**Norderneyweg 1**
**D-4300 Essen 1(DE)**

(72) Erfinder: **Michel, Wolfgang, Dr.**
**Ehrenhainstrasse 113**
**D-5600 Wuppertal 11(DE)**

(54) **Druckfester Isolationskörper mit kleiner Wärmeleitfähigkeit und grosser Festigkeit.**

(57) Als Isolationskörper mit kleiner Wärmeleitfähigkeit und großer Festigkeit werden mehrere aneinanderliegende Metallbleche (2, 2'') mit nichtmetallischen Zwischenlagen (3') und/oder Überzügen (3) vorgeschlagen. Die einzelnen Bleche (2, 2'') sind 10 $\mu$m bis 10 mm und die Zwischenlagen (3') bzw. die Überzüge (3) jeweils 10 $\mu$m bis 5 mm, der Gesamtkörper 5 bis 300 mm dick.

FIG.2

FIG.3

EP 0 123 186 A1

Croydon Printing Company Ltd

FRIED. KRUPP GESELLSCHAFT MIT BESCHRÄNKTER HAFTUNG

in Essen

Druckfester Isolationskörper mit kleiner Wärmeleitfähigkeit und großer Festigkeit

Die Erfindung betrifft einen druckfesten Isolationskörper mit kleiner Wärmeleitfähigkeit und großer
Festigkeit, wie er insbesondere zur Begrenzung von
Wärmeverlusten, von Bauteiltemperaturen und Wärmespannungen verwendet wird.

Nach dem Stand der Technik sind verschiedene
Isolationswerkstoffe bekannt, die je nach Verwendungszweck die Wärmeleistung, Konvektion oder Wärmestrahlung vermindern bzw. eindämmen sollen. Darüber hinaus
ist es auch schon bekannt, bei Druckbehältern Stutzenanschlüsse zu verwenden, die eine kleine Wärmeleitfähigkeit besitzten und deren Werkstoff wärmeelastisch
ist. Die Kombination von Werkstoffen liefert jedoch
dann keine befriedigenden Ergebnisse, wenn an die
Kombination der Werkstoffe bzw. deren Gesamtkonstruktion gleichzeitig mehrere, unterschiedliche Anforderungen gestellt werden, insbesondere dann, wenn
die speziellen Eigenschaften der einzelnen Werkstoffe eine technisch sinnvolle Ergänzung nicht ermöglichen oder sich diese sogar ausschließt.

Bei Isolationskörpern wird neben einer kleinen Wärmeleitfähigkeit bzw. einem niedrigen Wärmeleitkoeffizienten
$\lambda$ zur Verminderung der Wärmeleitung noch eine möglichst
hohe Festigkeit $\sigma$, insbesondere Druck-, Zug- und/oder
Biegefestigkeit des Werkstoffes bzw. der Werkstoffkombination gewünscht. Mit bekannten Isolationswerkstoffen sowie daraus kombinierten Bauteilen ist die
Forderung nicht zu erfüllen, da Werkstoffe mit hoher

Festigkeit $\sigma$ i. allg. auch einen hohen Wärmeleitkoeffizienten $\lambda$ haben und umgekehrt. Eine kleine Querschnittsfläche F des Isolationskörpers ergibt zwar eine geringe Wärmeleitung bzw. einen geringen Wärmedurchgang und damit eine gute Isolationswirkung. Auf der anderen Seite ergibt sich damit aber auch eine nur geringe Tragfähigkeit bzw. Belastbarkeit $\sigma \cdot F$. Ein großer Querschnitt F des Isolationskörpers ergibt zwar eine große Tragfähigkeit, erhöht aber unerwünschterweise gleichzeitig auch die Wärmeleitung bzw. den Wärmedurchgang.

Die der Erfindung zugrundeliegende Aufgabe besteht darin, einen Isolationskörper zu schaffen, der sowohl eine geringe Wärmeleitfähigkeit als auch eine hohe Tragfähigkeit aufweist, sowie besondere Verwendungen dieses Isolationskörpers anzugeben.

Diese Aufgabe wird dadurch gelöst, daß der Isolationskörper aus mehreren dicht aneinanderliegenden Metallblechen besteht, die nichtmetallische Zwischenlagen und/oder Überzüge besitzen. Bevorzugt werden die Bleche mit einer Oberflächenbeschichtung aus Email, Glas, Keramik, Phosphat oder temperaturbeständigen Kunststoffen versehen. Die genannten Werkstoffe werden auch bevorzugt als Zwischenlagen eingesetzt.

Nach der Erfindung werden die Bleche entsprechend den an den Isolationskörper gestellten Anforderungen ausgewählt, d.h. in der Regel werden Bleche eines Materials mit kleiner Wärmeleitfähigkeit verwendet, die aneinanderliegend, mit Überzügen und/oder Zwischenlagen, auch Druckkräfte übertragen können. Neben der durch die Materialwahl vorgegebenen geringen Wärmeleitfähigkeit der Bleche wirkt sich auch noch der Wärmeübergangswiderstand zwischen den einzelnen Blechen und den nichtmetallischen Werkstoffen der Überzüge bzw. der Zwischenlagen wärmeisolierend aus. Die Wirkung des erfindungsgemäßen druckfesten Isolationskörpers kann sowohl durch die Anzahl der aneinanderliegenden Bleche, als auch durch die jeweiligen Blechdicken und die Dicke der Oberflächenbeschichtung bzw. der Zwischenschichten eingestellt werden.

Die Dicke der einzelnen Bleche beträgt 10μm bis 10 mm, die Dicke der Zwischenlagen und/oder des Überzuges 10μm bis 5 mm. Die Dicke der einzelnen Bleche sowie die Dicke der Überzüge bzw. Zwischenschichten richten sich nach der von dem Gesamtkörper geforderten Wärmeleitfähigkeit und Druckfestigkeit sowie ggf. von der maximal zulässigen oder erwünschten Gesamtdicke des druckfesten Isolationskörpers.

Bevorzugt besitzt der druckfeste Isolationskörper jeweils aufgerauhte Blechoberflächen, auf die entweder ein ebenfalls in seiner Oberfläche aufgerauhter nichtmetallischer Überzug aufgetragen ist oder zwischen denen jeweils aufgerauhte Zwischenlagen liegen. Damit wird die Gesamtwärmeleitung durch den druckfesten Isolationskörper senkrecht durch die Bleche zum einen durch eine kleine Wärmeleitfähigkeit der einzelnen Bleche begrenzt und der wiederholte Wärmeübergang über flächenmäßig kleine Kontaktstellen von einer Blechoberfläche zur benachbarten durch die Oberflächenbeschichtung und/oder Zwischenlage gemindert. Eine Oberflächenaufrauhung ist z.B. durch eine Sandstrahlbehandlung oder durch Ätzen möglich. Die Oberflächen sollen so rauh wie möglich sein. So sollen sandstrahlbehandelte Oberflächen bis zu 10 μm und Oberflächen, die mit Stahlkörnern behandelt sind, bis zu 100 μm große Vertiefungen aufweisen.

**0123186**

Vorzugsweise werden Bleche aus Stahl mit einem Legierungsanteil von Chrom von 3 bis 30 Gew.-% und/oder Mangan von 5 bis 50 Gew.-% und/oder Nickel von 3 bis zu 10 Gew.-% verwendet. Diese Stähle besitzen vorteilhafterweise eine Wärmeleitfähigkeit, die etwa 1/3 des Betrages von niedrig legierten Baustählen beträgt. Eine weitere Erniedrigung der Wärmeleitfähigkeit der einzelnen geschichteten Bleche kann erzielt werden, wenn Bleche aus einer Titanlegierung eingesetzt werden. Bevorzugt soll Blech der Legierung TiAl6V4 nach DIN 17 851 mit 5,5 bis 6,75 Gew.-% Aluminium, 3,5 bis 4,5 Gew.-% Vanadium und Rest Titan verwendet werden.

Eine weitere Erniedrigung der Wärmeleitfähigkeit des Isolationskörpers wird durch Oberflächenbeschichtung der Bleche oder durch Zwischenlagen erreicht, wenn diese aus Email, Glas, Keramik, Phosphat oder aus temperaturbeständigem Kunststoff bestehen.

Je nach den geforderten mechanischen Eigenschaften, insbesondere hinsichtlich der Wärmeleitfähigkeit und der Druckfestigkeit werden nach einer Weiterbildung der Erfindung Bleche, Zwischenlagen und/oder Überzüge jeweils unterschiedlicher Zusammensetzung und/oder Dicke verwendet. So sind nicht zuletzt Festigkeitsgründe entscheidend für die Wahl des jeweiligen Materials und dessen Dicke. So wird aus Festigkeitsgründen eine beliebig dicke nichtmetallische Zwischenschicht unzweckmäßig sein, so daß in der Regel, insbesondere bei dicken Blechen die Zwischenschicht und/oder der Überzug dünner als die Blechdicke sind. Lediglich bei extrem dünnen Blechen (10 μm), d.h. bei der Verwendung von Folien, sind etwa gleich dicke Zwischenlagen und/oder Überzüge denkbar.

Auch die Gesamtdicke des Isolationskörpers richtet sich nach den an ihn gestellten mechanischen Anforderungen in Verbindung mit den verwendeten Materialien. Bevorzugt werden druckfeste Isolationskörper einer Gesamtdicke von 5 bis 300 mm verwendet.

Der erfindungsgemäße Isolationskörper aus aneinanderliegenden oberflächenbeschichteten Blechen und/oder Blechen mit nichtmetallischen Zwischenlagen weist durch die wiederholte Behinderung des Wärmeübergangs zwischen den einzelnen metallischen Blechen und den nichtmetallischen Beschichtungen bzw. Zwischenlagen eine Gesamtwärmeleitfähigkeit auf, die auf 1/3 der Wärmeleitfähigkeit vergleichbarer homogener Isolationskörper reduziert ist. Die Gesamtwärmeleitfähigkeit ist dabei insbesondere auch durch die nichtmetallischen Zwischenlagen bzw. die nichtmetallische Oberflächenbeschichtung auf ein Minimum reduziert. Die Dicke der Oberflächenbeschichtung und/oder der Zwischenlagen, deren Wärmeleitfähigkeit nur 1/40 des Betrages der Metallbleche beträgt, ist allerdings dadurch begrenzt, daß die Druckkräfte nicht zu einer Zerstörung der Oberflächenbeschichtungen bzw. der Zwischenlagen oder die Wärme zu einem Abplatzen der Oberflächenbeschichtungen oder einer Zerstörung dieser Schichten oder der Zwischenlagen führen darf. Insgesamt bewirken die Oberflächenbeschichtung und/oder die Zwischenlage eine gute Wärmeisolation, wobei gleichzeitig nicht auf die Festigkeitsmerkmale der Stahlbleche verzichtet werden muß, die der druckfeste Isolationskörper besitzt.

Druckfeste Isolationskörper sind in allen Formen und Verwendungen denkbar. So bietet sich bevorzugt die Verwendung des druckfesten Isolationskörpers an als Innenschicht eines Druckbehälters oder als wärmeisolierende Ofenlagerung zwischen einer Fundament-

- 6 -

platte und einem Ofen, ferner als wärmeisolierende Unterlage zum Ablegen heißer Werkstücke, wie sie beispielsweise zwischen Walzgerüsten beim Transport heißer gewalzter Bleche benötigt wird, wenn eine zu starke Oberflächenabkühlung des Werkstückes verhindert werden soll. Schließlich ist der druckfeste Isolationskörper auch als Isolierwerkstoff zwischen einem Motorblock und seinen Halterungen bzw. dem Fundament verwendbar.

Im einfachsten Fall besteht der druckfeste Isolationskörper aus geschichteten, mit Überzügen und/oder Zwischenlagen versehenen, rechteckigen, vieleckigen oder auch runden Blechen.

Die Blechränder können, um ein Verschieben der einzelnen Bleche und Zwischenlagen gegeneinander zu verhindern, an den Kanten zusammengeschweißt werden oder an den Ecken Sicken enthalten, in die das jeweils daraufliegende Blech eingreift. Daneben können die Bleche und die Zwischenlagen, insbesondere wenn sie kreisrund ausgebildet sind, von einem dünnen beschichteten Blech oder einem metallischen Blech und einer nichtmetallischen Zwischenlage umhüllt werden. Ebenso ist es möglich, die Bleche jeweils U-förmig zu biegen, wobei die aufeinander zu schichtenden Bleche sich durch den Schenkelabstand unterscheiden und das U-förmig gebogene Blech mit kleinsten Schenkelabstand an oder um ein entsprechend langes Balkenstück gelegt bzw. geklemmt ist. Werden extrem dünne Bleche bzw. Folien verwendet, so bietet sich ggf. auch ein Falten dieser Folien mit entsprechendem Ausfüllen der Zwischenräume durch Zwischenlagen an.

Ausführungsbeispiele der Erfindung sind in der Zeichnung dargestellt und werden im folgenden näher erläutert. Es zeigen:

- 7 -

0123186

Fig. 1    einen Isolationskörper in einer auszugsweisen schematischen Darstellung,

Fig. 2    einen aus mehreren beschichteten Blechen
bestehenden Isolationskörper in einem
auszugsweisen Querschnitt längs der
Schnittebene II-II in Fig. 1,

Fig. 3    einen abwechselnd aus metallischen
Blechen und nichtmetallischen Zwischenlagen bestehenden Isolationskörper in
einem auszugsweisen Querschnitt längs
der Schnittebene II-II in Fig. 1,

Fig. 4    einen als Ofenlagerung ausgebildeten
Isolationskörper in einer Prinzipsskizze,

Fig. 5    einen mit einem eingebauten Isolationskörper versehenen Druckbehälter im Querschnitt,

Fig. 6    ein Blech eines Isolationskörpers mit an
einer Ecke befindlicher Sicke in perspektivischer Darstellung,

Fig. 7    übereinander geschichtete Bleche gemäß

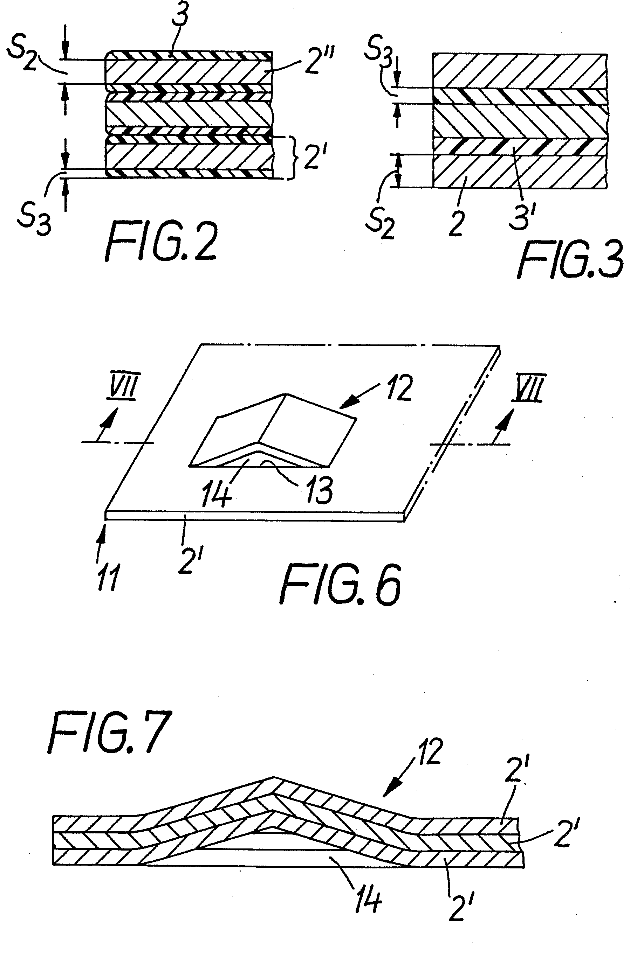

Fig. 6 in einem Querschnitt längs der
Linie VII-VII,

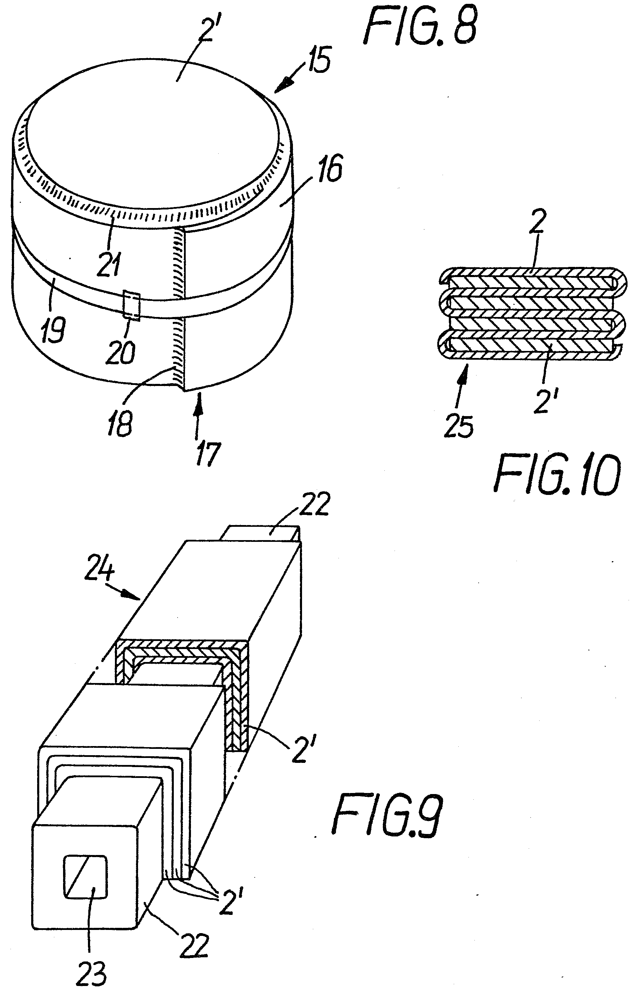

Fig. 8    einen zylindrischen Isolationskörper mit
einem umhüllenden Mantelblech in perspektivischer Darstellung,

Fig. 9    einen Tragbalken mit einem teilweise
dargestellten U-förmigen Isolationskörper
in perspektivischer Darstellung und

Fig. 10          einen aus einem metallischen Blech gewickelten Isolationskörper mit nichtmetallischen Zwischenlagen.

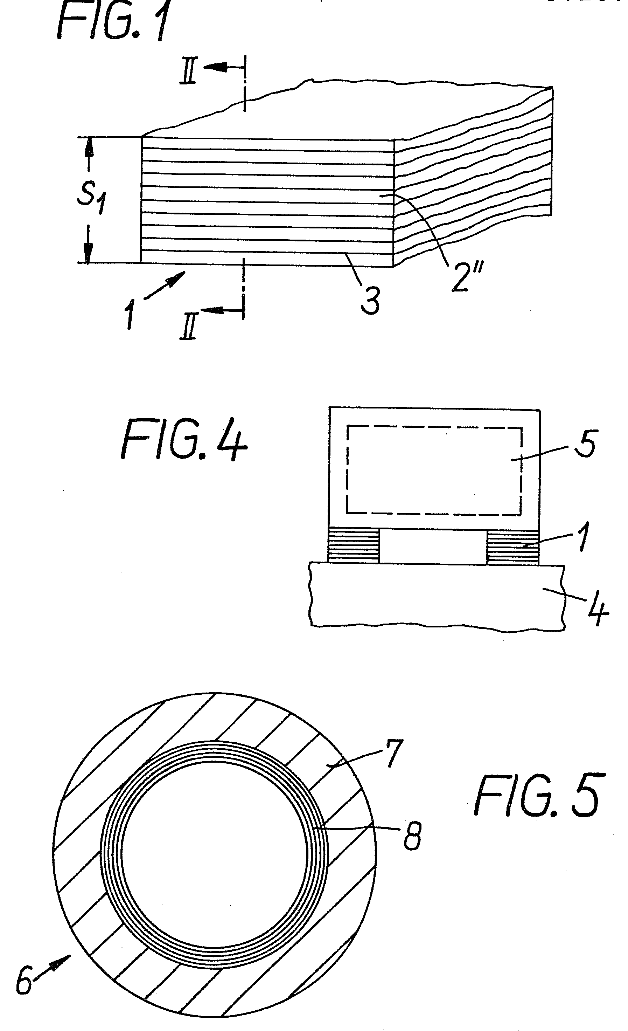

Der in den Fig. 1 und 2 dargestellte druckfeste Isolationskörper 1 weist zehn lose aufeinander gelegte oberflächenbeschichtete Bleche 2' auf, die jeweils aus einem Stahlblech 2" des Werkstoffs X40MnCr23 (0,3...0,5% C, bis 0,8% Si, 21...24% Mn, bis 0,1% P, bis 0,03% S, 3...5% Cr, Rest Fe) und einer Oberflächenbeschichtung bzw. einem Überzug 3 aus Email bestehen.

Dabei beträgt die Dicke $s_2$ der einzelnen Stahlbleche 2 etwa 3 mm und die Dicke $s_3$ der emaillierten Oberflächenbeschichtungen 3 etwa 1 mm, so daß sich eine Gesamtdicke $s_1$ des Isolationskörpers 1 von 50 mm ergibt.

In einem anderen Ausführungsbeispiel gemäß Fig. 3 weist der Isolationskörper nichtbeschichtete Stahlbleche 2 aus X40MnCr23 und einzelne wärmeisolierende Zwischenlagen 3' aus einer Keramik auf. Als Keramik kann Aluminiumoxid ($Al_2O_3$) und Aluminiumtitanat ($Al_2TiO_5$) verwendet werden.

Der Isolationskörper 1 kann beispielsweise als wärmeisolierende Ofenlagerung gemäß Fig. 4 verwendet werden, wobei die Verwendung von beschichteten Blechen 2' gemäß Fig. 2 oder von mit Zwischenlagen 3' versehenen Blechen 2 gemäß Fig. 3 denkbar ist. In jedem Fall ist der Isolationskörper 1 zwischen einer Fundamentplatte 4 und einem Ofen 5 angeordnet.

Eine weitere bevorzugte Verwendungsmöglichkeit ist in Fig. 5 schematisch dargestellt. Der Druckbehälter 6 besteht aus einer rohrförmigen tragenden Wand 7, an deren Innenfläche der druckfeste Isolationskörper 8, der ebenfalls eine Rohrform besitzt, angeordnet ist.

Bei dem Ausführungsbeispiel nach Fig. 6 weisen die rechteckig ausgebildeten oberflächenbeschichteten Bleche 2' an ihren Ecken 11 partiell ausgebildete Sicken 12 auf. Dabei besteht in den Blechen 2' unter der Sicke 12 eine durch zwei Schnittkanten 13 gebildete Öffnung 14. Beim Aufeinanderlegen der Bleche 2' zur Bildung eines Isolationskörpers kann die Sicke 12 des jeweils darunter liegenden Bleches 2' in die Öffnung 14 des jeweils darüber liegenden Bleches 2' eingreifen (vgl. Fig. 7).

Bei dem in Fig. 8 dargestellten Ausführungsbeispiel weist der zylindrisch ausgebildete Isolationskörper 15 übereinanderliegende kreisrunde oberflächenbeschichtete Bleche 2' auf, die durch ein Mantelblech 16 an ihrer gemeinsamen zylindrischen Außen- oder Mantelfläche umfaßt sind. Das Mantelblech 16 ist an der mit 17 bezeichneten Stelle überlappt und wird durch eine Schweißnaht 18 zusammengehalten. Zusätzlich kann das Mantelblech 16 mit einem Spannband 19 mit einer Klammer 20 gehalten werden. An den Stirnseiten ist das Mantelblech 16 mit den jeweils außenliegenden oberflächenbeschichteten Blechen 2' durch eine Schweißnaht 21 verbunden.

In Fig. 9 ist ein zur Auflage von glühenden Metallteilen bestimmter Balken 22 dargestellt, der einen Hohlraum 23 aufweist, der zur Schonung der ihn tragenden (hier nicht näher dargestellten) Konstruktion von einem Kühlmedium durchflossen werden kann. Über dem Tragbalken 22 befindet sich ein U-förmiger Isolationskörper 24, der aus mehreren U-förmig gebogenen oberflächenbeschichteten Blechen 2' besteht.

Bei dem Ausführungsbeispiel gemäß Fig. 10 ist der
Isolationskörper 25 aus einem Stahlblech 2 gewickelt,
das zwischen seinen einzelnen Windungen oberflächenbeschichtete Bleche 2' aufweist.

P a t e n t a n s p r ü c h e

1. Druckfester Isolationskörper mit kleiner Wärmeleitfähigkeit und großer Festigkeit, bestehend
aus mehreren aneinanderliegenden Metallblechen (2,
2") mit nichtmetallischen Zwischenlagen (3') und/
oder Überzügen (3).

2. Isolationskörper nach Anspruch 1, gekennzeichnet
durch eine Dicke ($s_2$) der Bleche (2, 2") von 10 µm
bis 10 mm und einer Dicke ($s_3$) der Zwischenlagen (3')
und/oder der Überzüge (3) von 10 µm bis 5 mm.

3. Isolationskörper nach Anspruch 1 oder 2, gekennzeichnet durch einen auf eine aufgerauhte Blechoberfläche aufgetragenen Überzug (3), der ebenfalls
in seiner Oberfläche aufgerauht ist und/oder jeweils
aufgerauhte Blechoberflächen und Zwischenlagen (3').

4. Isolationskörper nach einem der Ansprüche 1 bis 3,
gekennzeichnet durch Bleche (2, 2") aus Stahl mit
einem Legierungsanteil von Chrom von 3 bis 30 %
und/oder Mangan von 5 bis 50 % und/oder Nickel von
3 bis 10 %.

5. Isolationskörper nach Anspruch 4, gekennzeichnet
durch Bleche (2, 2") aus Stahl mit einem Legierungsanteil von Chrom von 3 bis 25 % und/oder
Mangan von 5 bis 30 % und/oder Nickel von 3 bis 10 %.

6. Isolationskörper nach Anspruch 5, gekennzeichnet
durch Bleche (2, 2") aus einem Stahl X40MnCr23
mit 0,3 bis 0,5 % Kohlenstoff, 21 bis 24 % Mangan,
3 bis 5 % Chrom, bis 0,8 % Silicium, bis 1 % Phosphor, bis 0,03 % Schwefel und Rest Eisen.

7. Isolationskörper nach einem der Ansprüche 1 bis 3, gekennzeichnet durch Bleche aus einer Titanlegierung.

8. Isolationskörper nach Anspruch 7., gekennzeichnet durch Bleche aus der Titanlegierung TiAl6V4 nach DIN 17 851 mit 5,5 bis 6,75 % Aluminium, 3,5 bis 4,5 % Vanadium und Rest Titan.

9. Isolationskörper nach einem der Ansprüche 1 bis 8, gekennzeichnet durch Bleche (2, 2") mit einer Oberflächenbeschichtung (3) und/oder Zwischenlagen (3') aus Email, Glas, Keramik, Phosphat oder temperaturbeständigem Kunststoff.

10. Isolationskörper nach einem der Ansprüche 1 bis 9, gekennzeichnet durch Bleche (2, 2"), Zwischenlagen (3') und/oder Überzüge (3), die jeweils eine unterschiedliche Zusammensetzung und/oder Dicke $(s_2, s_3)$ aufweisen.

11. Isolationskörper nach einem der Ansprüche 1 bis 10, gekennzeichnet durch eine Gesamtdicke $(s_1)$ von 5 bis 300 mm.

12. Verwendung eines Isolationskörpers nach einem der Ansprüche 1 bis 11, als Innenschicht (8) eines Druckbehälters (6).

13. Verwendung eines Isolationskörpers nach einem der Ansprüche 1 bis 11, als wärmeisolierende Ofenlagerung zwischen einer Fundamentplatte (4) und einem Ofen (5).

14. Verwendung eines Isolationskörpers nach einem der Ansprüche 1 bis 11 als wärmeisolierende
Zwischenlage zum Ablegen heißer Werkstücke
auf einem Träger (22).

15. Verwendung eines Isolationskörpers nach einem
der Ansprüche 1 bis 11 als Isolierwerkstoff
zwischen einem Motorblock und seinen Halterungen bzw. einem Fundament.

FIG. 1

$S_1$

II

II

1

3

2"

FIG. 4

5

1

4

FIG. 5

7

8

6

FIG.2

FIG.3

FIG.6

FIG.7

FIG.8

15

2'

16

21

19

20

18

17

FIG.10

2

2'

25

FIG.9

22

24

2'

2'

22

23

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 887 345 (COMMISSARIAT A L'ENERGIE ATOMIQUE) <br> * Seite 1, Zeilen 64-70; Ansprüche 1,5; Figur 2 * | 1 | F 16 L 59/02 <br> B 32 B 15/18 |
| A | | 2,8 | |
| A | FR-A-2 302 982 (TECHNIGAZ) <br> * Ansprüche 1,2 * | 1 | |
| A | US-A-4 122 203 (STAHL) <br> * Zusammenfassung; Figuren 5,6 * | 1,9 | |
| A | GB-A-1 084 503 (BRITISH AIRCRAFT) <br> * Ansprüche 1,2,5 * | 1,9 | RECHERCHIERTE SACHGEBIETE (Int. Cl. ³) <br><br> F 16 L <br> B 32 B |

Der vorliegende Recherchenbericht wurde für alle Patentansprüche erstellt.

| Recherchenort | Abschlußdatum der Recherche | Prüfer |
|---|---|---|
| DEN HAAG | 23-07-1984 | SCHAEFFLER C.A.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82